# EUROPEAN PATENT APPLICATION

(11) **EP 2 315 136 A1**
(43) Date of publication of application: **27.04.2011**
(21) Application number: 09012559.2
(22) Date of filing: 05.10.2009
(51) Int. Cl.: G06F 17/30

(54) **Method for analysis of differences in documents**

(71) Applicant: Weil, Sven, 86940 Schwifting (DE)
(72) Inventor: Weil, Sven, 86940 Schwifting (DE)

(57) **Abstract**

The object of the present invention is a method of analysing differences of at least one document (100, 150), comprising the step of comparing with a comparator (500) at least two analysis data-structures (400, 450) and generating an output data information (600) for simplyfying the analysis of said at least one document (100, 150), **characterised in that** said analysis data-structures (400, 450) comprise datasets (401, 402, 451, 452) using keycodes from keyword maps (300, 350) to represent the content of said document (100, 150), in particular using at least one keyword list (301, 302, 303, 351, 352, 353), in particular using the intermediate step of representing said at least one document (100, 150) with a tree structure (200, 250).

## Description

### Field of Invention

The invention relates to the analysis of differences of documents, in particular but not restricted to documents in form of a tree structure, such as documents in a markup language (e.g. HTML, XML, SGML). The analysis of said differences of said documents can be a structure differences and/or a content differences analysis.

At present one would use either state of the art methods based on checksums bound to specific elements, e.g, HTML elements for HTML documents, or state of the art methods based on plain text strings for said analysis, or state of the art methods based on date and validity or length comparisons, more recently also extended to semantic analysis of said actual content.

Frequently such analysis is required to accomplish in a minimum amount of time, even for large documents. For such requirement checksum calculations of single elements prove too complicated and time consuming, as well as string operations or semantic analysis do. Time and validity comparisons do not allow any conclusion on actual content of said document and pure length comparisons have to be applied on said document split in multiple segments, to be able to obtain any sense of location related to a difference in occurence or matching of a property, so again compute intensive, and do not precisely indicate locations or type (insertion, deletion, alteration) of said difference of property.

One additional difficulty with present methods, is when applied to detect differences for multiple properties in said at least one document, they may need to be executed repeatedly for each such property, each time requiring conversion of large parts of said at least one document or the entire document, or require holding a representation of the entire said at least one document in memory.

### Background Art

A first known method for detection of differences in web pages is disclosed by US Pat. No. US5,898,836. Said first known method uses checksums bound to HTML tags to store a current status of a document and, when the document is compared to a previous version of the same document, uses these checksums to determine if a change occured. Said first known method is suitable for simple change detection, but is relatively computing intensive due to the calculation of the checksums for every element of a web page bound by HTML tags and also will not allow to detect if an element was modified only or if something was inserted into or deleted from said element of a webpage. Said first known method proves also difficult for evaluation of structural differences, as checksums do not reflect structural differences at all. To detect such structural differences the HTML tags have to be evaluated. This implies String comparison operations that hinder fast execution of such a method.

A second known method for similar use, but with different embodiments, is disclosed by US Pat. No. US6,785,864. Said second known method uses a time-stamp to determine if a web page referenced with a URL has changed. Said second method is not suitable to determine a change in structure or content of said web page as only a time information is provided for comparison.

A third known method for detecting change in web pages is disclosed in US Pat. No. US5,978,842. Said third known method uses checksums to detect differences in pages. Said third method is again not suitable to determine a change in structure or content of said web page at a detailled level and is compute intensive, as checksum calculations need to be applied.

### Summary of the Invention

The object of the present invention is to define a method for analysing differences of at least one document, which enables to ease and speed the analysis of differences of said at least one document and reduces the amount of memory and resources needed to accomplish such analysis.

The invention provides a method to perform such analysis in comparing specific analysis data structures (400, 450) created of said at least one document (100, 150), with purely arithmetic operations, suitable and optimizied for enabling a high performant analysis of differences of said at least one document (100, 150).

Said analysis data-structures (400, 450) can be created at the same moment in time or a different moments in time from either one or more documents (100, 150).

Even though the analysis will be applied to said analysis data structures (400, 450), the results will enable to draw conclusions on said at least one document (100, 150). This is particularly interesting to analyze if some documents are equal or in which parts they differ, for instance in a client-server or other distributed environment such as a network, the world wide web or the internet, as the original documents (100, 150) do not need to be sent to the machine performing the actual analysis. Instead, only their analysis data structures (400, 450), which are much lighter in terms of memory or bandwidth requirements, need to be transmitted.

In general, it is frequently desireable to focus or limit the analysis on specific properties of a document or a tree structure, more specifically content or structure related properties. To do so, queries, conditions and test-cases may be specified in form of parameters or expressions for the creation of the analysis data-structures (400, 450). Also, these could be used to filter specific content or structures out of a document (100, 150), for instance for applications requiring selective display or transmission of only parts of a document (100, 150).

Said creation of analysis data-structures uses at least one keyword list (301, 302, 351, 352) to represent these parameters or expressions, that have to be specifically analysed within said at least one document (100, 150) or tree structure (200, 250). Said keyword list (301, 302, 351, 352) may also contain lexical, syntactical, logical or regular expressions or processing instructions to be evaluated on the contents of said at least one document (100, 150) or tree structure (200, 250).

To enable analysis of differences on these specific properties in said at least one document (100, 150), the invention suggests to use the same keyword list, or part of said keyword list, for creation of the analysis data-structures (400, 401, 450, 451) to be compared.

### Invention

The present invention lays out a method for analysis of differences of at least one document (100, 150), using the means to separate the information content and structure from said document (100, 150), either directly or with an intermediate representation in a tree structure (200, 250), provided by at least two analysis data-structures (400, 450), representing said information content and structure with keycodes from at least one keyword map (300, 350), enabling a fast comparison of said two analysis data-strucures (400, 450) and easy further processing.

The comparison of said at least two analysis data-structures (400, 450) instead of comparison of the at least one document (100, 150) they are based on provides the following advantages:
- the memory consumption of the analysis data-structures (400, 450) may be far smaller than the memory consumption of the a least one document (100, 150),
- the language elements or the textual content, the objects or the object type are replaced by keycodes from a keyword map (300, 350), enabling a much simpler and faster comparison of the said language elements or textual content,
- by the means of a special encoding, the occurence of keywords or the compliance with at least one lexical, syntactical, logical or regular expression or processing instruction is checked already during the creation of the analysis data-structures and encoded into said analysis data-structures, and so avoiding complex and time-consuming post-processing operations,
- the analysis data-structures can be separated from the documents they are based on and evaluated entirely separatedly and independently of said documents, for instance on a remote machine, but allow to draw conclusions on said documents.

The method of the present invention can be applied when two analysis data-structures (400, 450) of one and the same document (100, 150) are available, to draw a conclusion on if and how said same document (100, 150) has changed.

The method of the present invention can also be applied when two analysis data-structures (400, 450) of different documents (100, 150) are available, to draw a conclusion on if and how said documents (100, 150) are different from each other.

In a particular application, a conclusion can be drawn on what is missing and/or what has changed in one version of said document (100) compared to the other version of said document (150), and vice versa.

In a particular application, a conclusion can be drawn on the analysis itself. In the case an analysis data-structure (400) was created based on one document (100) using a certain keymap (300), if same document (100) was processed again, same analysis data-structure (400) should result. If it can be assumed that the document did not change and a difference is to be found between the two analysis data-structures (400, 450), the conclusion is, that as the analysis data-structures are not the same and they must have been created using different keyword maps (300, 350) and/or different keyword lists (301, 302, 351, 352).

The method of the present invention can also be applied when one first analysis data-structure (400) of one document (100) is available and a second analysis data-structure (450), which is not created on the basis of one specific document, but rather defined on another basis, is also available, to analyse said document (100).

In case of an unstructured, non-hierarchical document, a typical representation could be in form of a list of nodes at one level. This can be seen as a flat, single level tree structure.

Generally, such a tree structure (200, 250) contains a root node (201, 251), the origin of the tree, from where branches may depart, each of said branches being terminated by a child node (202, 203, 252, 253) at its end. From said child nodes more branches may depart, each of said branches being terminated by a child node at its end. This can be repeated over several hierarchical levels, until child nodes are reached that do not have branches: these are called leaves or terminal nodes. A concrete example of such a tree structure (200, 250) is the "Document Object Model" (DOM), published and standardized by the worldwide web consortium (w3c).

In the case of this invention, the use of a tree structure (200, 250) eases the encoding of said at least one document (100, 150) into said analysis data-structure (400, 450). For documents (100, 150) in a language that may be a markup-language, the tree structure (200, 250) is defined by the language elements. For documents (100, 150) in spoken languages, that may contain punctuation and structured text, marked with structural elements, the tree structure (200, 250) may be based on such punctuation and structural elements, for instance points to separate sentences in different nodes (201, 202, 251, 252), spaces to separate words into different nodes (201, 202, 251, 252), a paragraph and a line break to separate entities of text elements.

Based upon the view of a tree structure (200, 250), one can derive that every node (201, 202, 251, 252) of said tree structure (200, 250) owns two major properties : an index for the count of vertical positions it is separated from the root node (201, 251) of the tree structure (200, 250), increasing in vertical direction from the root node (201, 251) of said tree structure (200, 250), and an index for the count of horizontal positions it is separated from the root node (201, 251) of the tree structure (200, 250), increasing in horizontal direction from the root node (201, 251) of said tree structure (200, 250).

With said two properties, the position of said node (201, 202, 251, 252) in said tree structure (200, 250) is defined, and can be represented by a value pair (horizontal index, vertical index). The structure of said tree structure (200, 250) can then be represented by a list of said value-pairs. Each of said value-pairs corresponds to one data of the analysis data structure (400, 450). Storing the vertical index in the analysis data structure (400, 450) can be omitted, as said vertical index can be read from the analysis data structure (400, 450) by counting the number of datasets (401, 402, 451, 452) in said analysis data structure (400, 450).

By indication of the horizontal index in said analysis data structure (400, 450), it is guaranteed that parent-child-relations can be detected and reproduced.

The keycode and optionally additional values describe the content or the type of the node (201, 202, 203, 251, 252, 253) and determine which element of a document (100, 150) is represented by the node (201, 202, 203, 251, 252, 253).

To describe structures and content, in most cases, a language will be used. A document (100, 150) for example, is commonly written in a language. A language is defined by a finite quantity of language elements.

A language may be a natural, spoken language or an abstract language, for instance a programming language or a markup language.

For a spoken language, the language elements will be the words of said language, for a programming language the language elements are the commands and/or the keywords of said programming language.

The range of numerical values of the keycodes, also called number space, is chosen in a way that it at least contains enough values to properly assign exactly one value to each element of the language.

In cases where due to bit-resolution the resulting number space is not completely used, the code should be chosen to ideally be contained in the lower area of the number space. For fine-tuning analysis and optimizing performance, the encoding can use logical groups, that may hold several elements of a language or variable expression with for example similar properties. Said logical groups will be assigned to specific, ideally continuous areas of the number space enabling fast detection of group relations. In the case of a markup language, for instance, one could define logical groups as "Simple Elements", "Specific Elements", "Keywords", "Logical Expressions", "Regular Expressions", "Id's", "Classes".

To understand the occurence of specific properties or keywords in a document (100, 150), queries for said properties or keywords, represented by said keycodes, may be specified by a user at run-time, just before said method is executed.

The properties to test on at least one document (100, 150) are specified by parameters or expressions, composed by at least one element of the language or a combination of at least two elements of the language space, for instance in form of lexical, syntactical, logical or regular expressions or processing instructions. Said properties to test on at least one document (100, 150) constitute a keyword from a keyword list (301, 302, 303, 351, 352, 353).

To achieve efficient processing and storage of the elements of a language or of variable expressions, a keyword map (300, 350) is created on the basis of said keyword list (301, 302, 303, 351, 352, 353), wherein each element of said keyword map (300, 350) contains one keyword associated with one keycode in form of one uniquely assigned value.

By this encoding, the analysis data-structure (400, 450) enables very fast diagnosis of the occurence of keywords within at least one document (100, 150) and so speeds up and eases the programming and execution of analysis or other post-processing operations.

Indeed, this encoding enables a storage of the analysis data-structure (400, 450) in a very compact and efficient way, consuming only a portion of the storage needed for the source document (100, 150).

As the analysis data-structures (400, 450) hold for every node (201, 202, 251, 252) the data information comprising at least the keycode and optionally one or more content related information, all in the form of numerical values, we can define a rule for identity of two nodes (201, 202, 251, 252) in regular cases:
• The nodes (201, 202, 251, 252) are identical, if their corresponding datasets (401, 402, 451, 452) are identical :

| | | | |
|---|---|---|---|
| ○ | vertical index 1 | = | vertical index 2 |
| ○ | horizontal index 1 | = | horizontal index 2 |
| ○ | keycode 1 | = | keycode 2 |
| ○ | weight 1 | = | weight 2 |

The horizontal index is a numerical value that represents the index count at which said node is situated in said tree structure (200, 250), relative to said root node (201, 251) of said tree structure (200, 250). This value will start at said root node (201, 251) with "0" or any other preferred numerical value. However it is important that said root node (201, 251) is assigned the smallest numerical value for its horizontal index in said document (100, 150) and that all other said nodes (202, 203, 252, 253) are assigned values, that will continuously increase, based on their location in said document (100, 150) or said tree structure (200, 250). Several other said nodes (202, 203, 252, 253) may have the same horizontal index, for instance in cases where the number of branches and said nodes (202, 203, 252, 253) between said several nodes (202, 203, 252, 253) and said root node (201, 251) is the same.

The vertical index is a clear, uniquely assigned, continuous, increasing numerical value, that will start at said root node (201, 251) with "0" or any other preferred numerical value. However, it is important that said root node (201, 251) is assigned the smallest numerical value of the elements in said document (100, 150) or said tree structure (200, 250) and that all other said nodes (202, 203, 252, 253) are assigned continuous values, based on their location in said document (100, 150) or said tree structure (200, 250).

With the vertical index and the horizontal index, every said node (201, 202, 203, 251, 252, 253) can be positioned in the view of said tree structure (200, 250).

However, a rule for identity of two nodes (201, 202, 251, 252) may be defined in nonregular cases, for instance if a node has been moved in one document, as:
- The nodes (201, 202, 251, 252) are identical, if their corresponding datasets (401, 402, 451, 452) are identical :
   - ○: vertical index 1 + vertical offset 1 = vertical index 2 + vertical offset 2
   - ○: horizontal index 1 + horizontal offset 1 = horizontal index 2 + horizontal offset 2
   - ○: keycode 1 = keycode 2
   - ○: weight 1 = weight 2

Hierarchical relations can be reconstructed based on the horizontal and vertical index information of said nodes (201, 202, 203, 251, 252, 253). For instance, but not limited to :
- If said node (201, 202, 203, 251, 252, 253) with a higher vertical index is located on a higher horizontal index as a said second node (201, 202, 203, 251, 252, 253), and no further nodes are separating these said two nodes, said second node is a parent node of said first node, and the first node is a child node of said second node.
- If said node (201, 202, 203, 251, 252, 253) with a higher vertical index is located on the same horizontal index as said second node (201, 202, 203, 251, 252, 253), and no further nodes are separating these said two nodes, said two nodes are siblings and said second node is the left sibling of said first node, and the said first node is the right sibling of said second node.
- If said node (201, 202, 203, 251, 252, 253) with a higher vertical index is located on a smaller horizontal index as said second node (201, 202, 203, 251, 252, 253), and no further said nodes are separating these said two nodes, said second node is a leaf or a terminal node of it's branch and said first node is a new branch of it's parent node.

Said two analysis data-structures (400, 450) are defined as identical, if every node (201, 202) of one analysis data-structure (400) is identical with the corresponding node (251, 252) of the second analysis data-structure (450).

For the comparison of two analysis data-structures (400, 450), each dataset (401, 402) of the current analysis data-structure (400) is compared with the corresponding dataset (451, 452) of the reference analysis data-structure (450).

If a difference is found between said dataset (401, 402) of the current analysis data-structure (400) and said dataset (451, 452) of the reference analysis data-structure (451, 452), said difference does also exist between the documents (100, 150) on the basis of which the current analysis data-structure (400) and the reference analysis data-structure (450) have been created.

Said difference can be due to at least one of the following reasons:
- A node was added in the current document,
- A node was deleted from the current document,
- A node was moved in the current document,
- A node was changed in the current document.

The method of the present invention allows to detect said difference and to determine said reasons, enabling to provide informations of said change at detailed level, including but not limited to the reason of change, the differences found, the exact location, the node, the document.

### Description of Figures

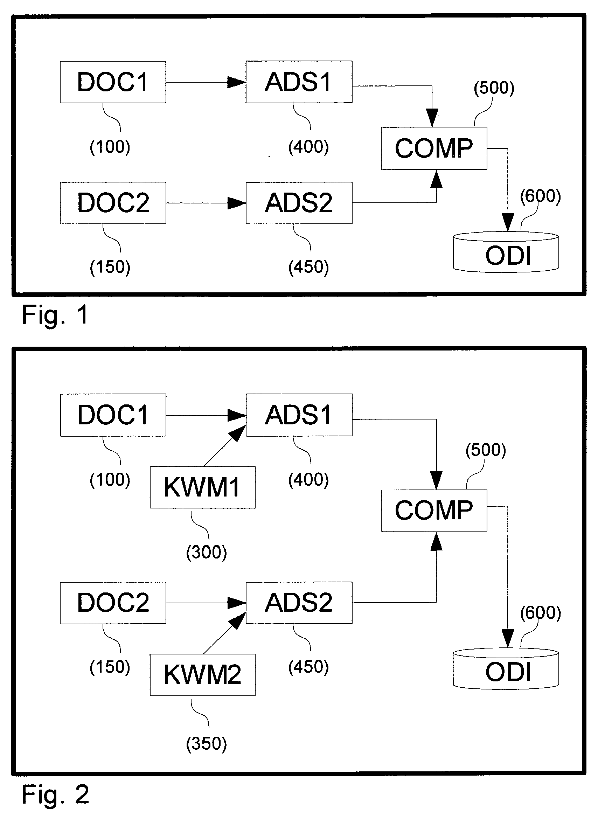

**Fig. 1** is a diagram representation of the analysis of two documents (100, 150).
**Fig. 2** is a diagram representation of the analysis of two documents (100, 150), wherein keyword maps (300, 350) are used to provide keycodes.

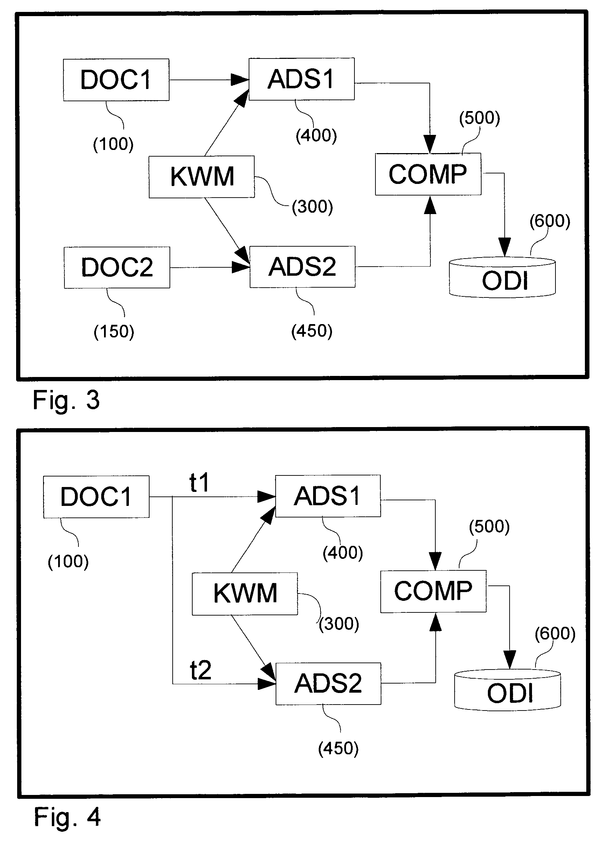

**Fig. 3** is a diagram representation of the analysis of two documents (100, 150), wherein one common keyword map (300) is used to provide keycodes.
**Fig. 4** is a diagram representation of the analysis of one document (100), recorded at two different points in time (t1, t2).

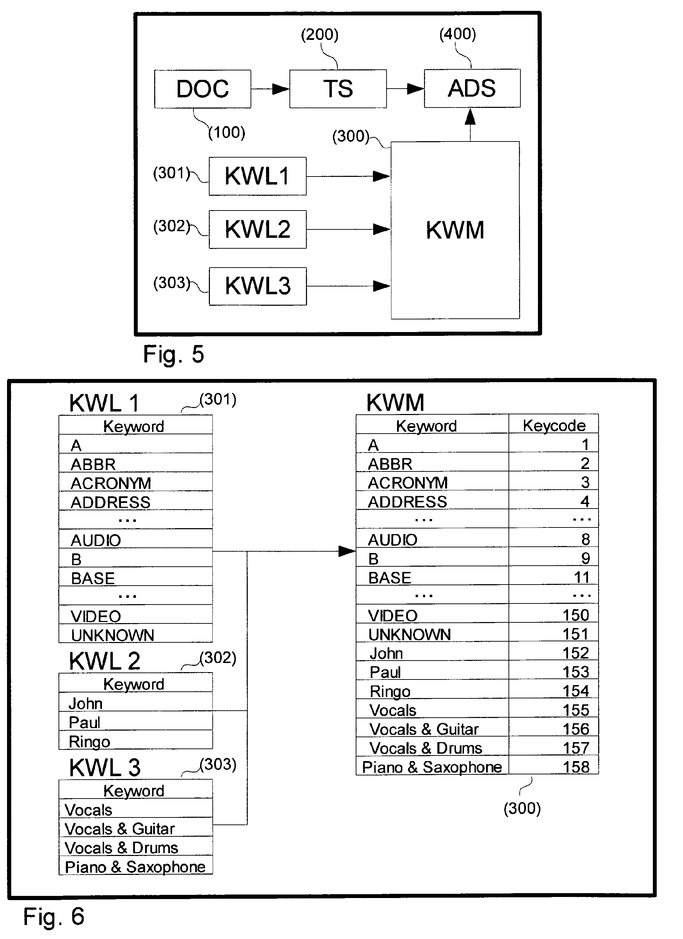

**Fig. 5** is a diagram of a document (100) transformed into a analysis data-structure (400), wherein an intermediate tree structure (200) is used and a keyword map (300), based on several keyword lists (301, 302, 303) is used to provide keycodes.
**Fig. 6** is a diagram representation of the creation of one keyword map based on several keyword lists (301, 302, 303).

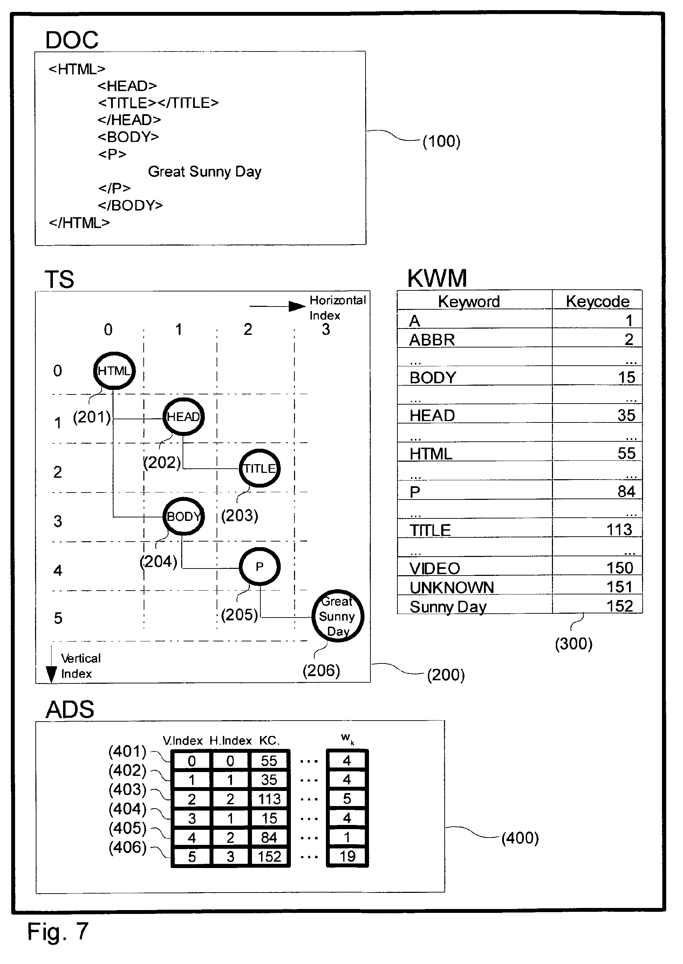

**Fig. 7** is a diagram of a document (100), transformed into a tree structure (200), encoded with use of a keyword map (300) into an analysis data-structure (400).

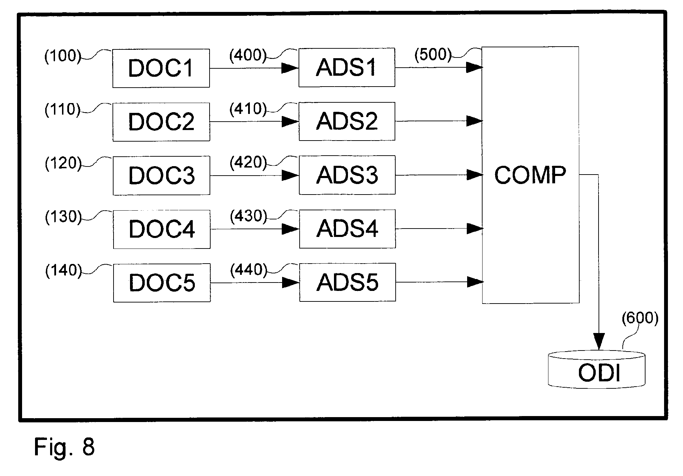

**Fig. 8** is a diagram representation of the analysis of multiple documents (100, 110, 120, 130, 140).

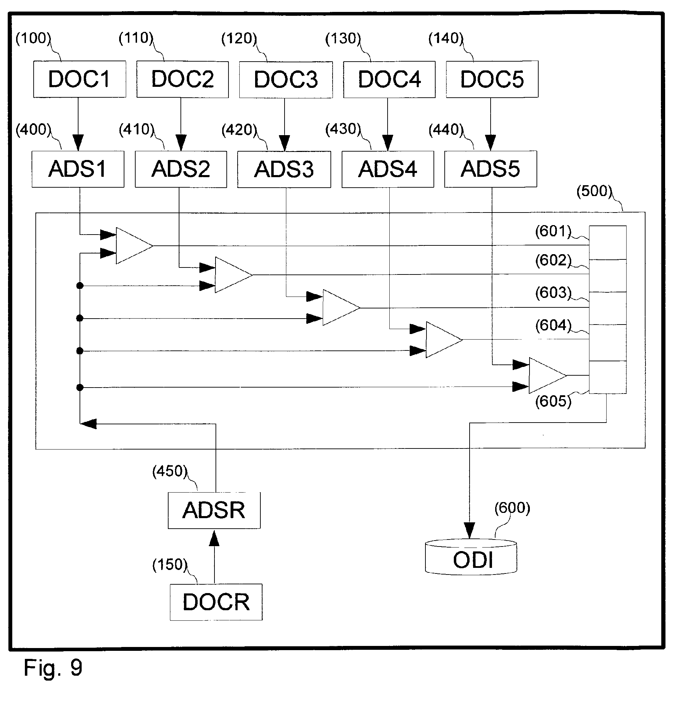

**Fig. 9** is a diagram representation of the analysis of multiple documents (100, 110, 120, 130, 140), compared with one reference document (150).

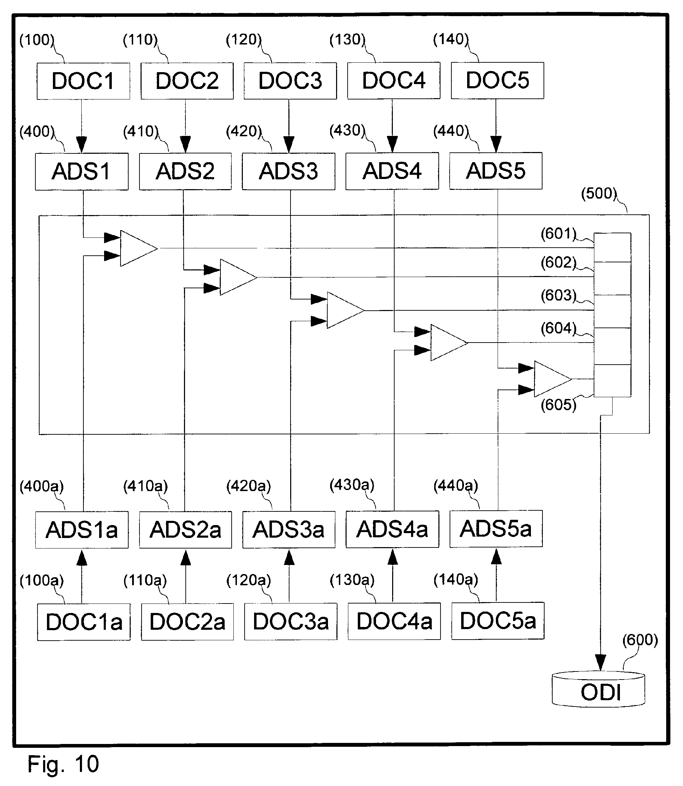

**Fig. 10** is a diagram representation of the analysis of multiple documents (100, 110, 120, 130, 140), compared with their previous versions (100a, 110a, 120a, 130a, 140a).

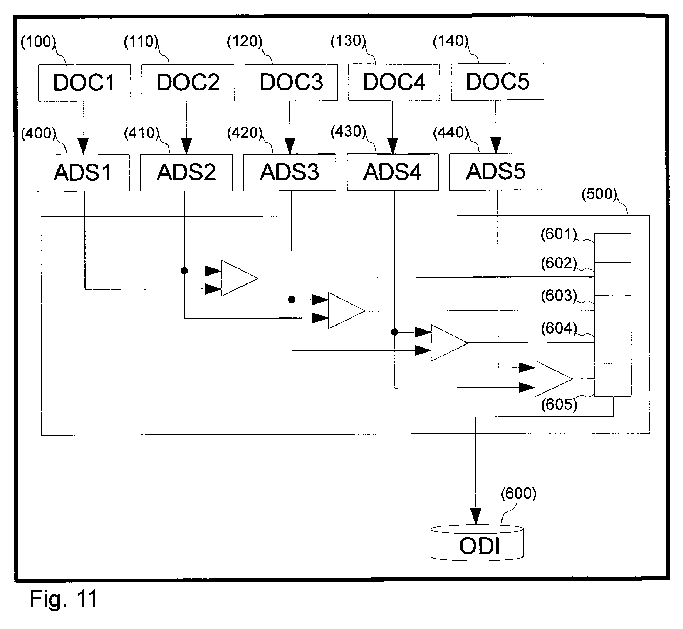

**Fig. 11** is a diagram representation of the analysis of multiple documents (100, 110, 120, 130, 140), compared with their predecessors (410 with 400, 420 with 410, 430 with 420, 440 with 430).

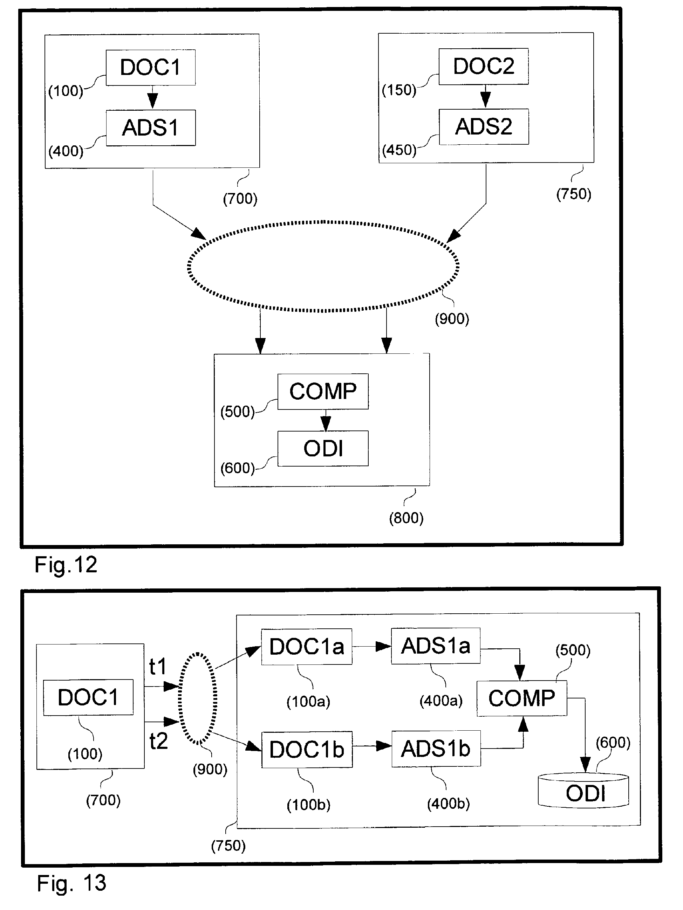

**Fig. 12** is a diagram representation of the analysis of two documents (100, 150) located on two separate computers (700, 750) connected over a network (900) with a third computer, performing the analysis comparing the analysis data-structures (400, 450) transmitted from the computers (700, 750), using a comparator (500).
**Fig. 13** is a diagram respresentation of one first example of use of claimed method.

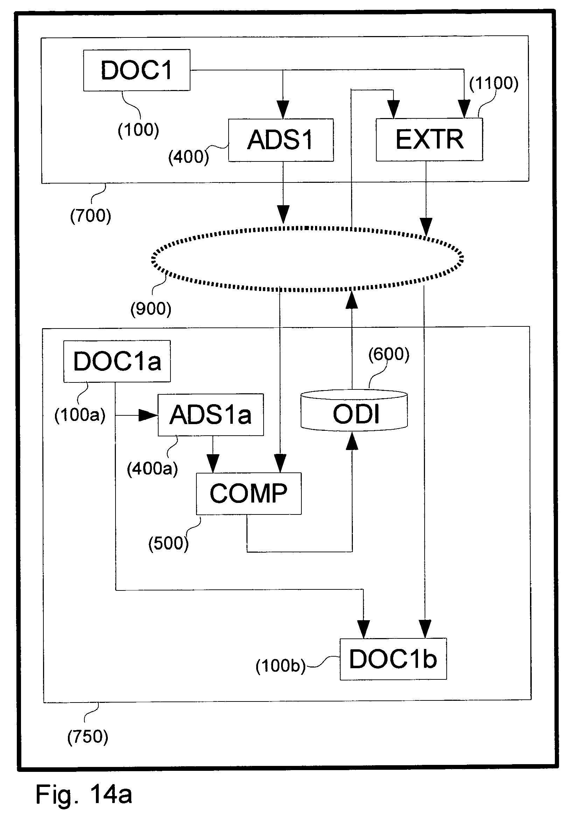

**Fig. 14a** is a diagram respresentation of one second example of use of claimed method.

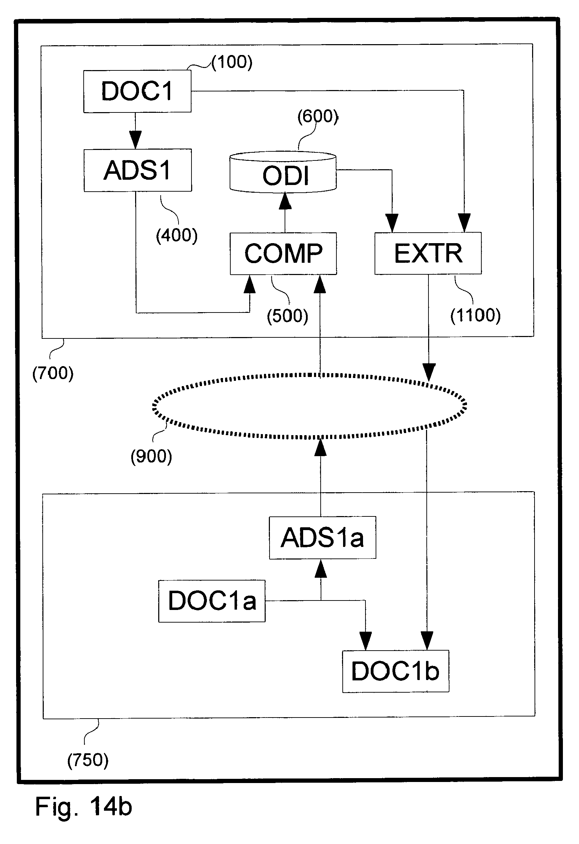

**Fig. 14b** is a diagram respresentation of one third example of use of claimed method.

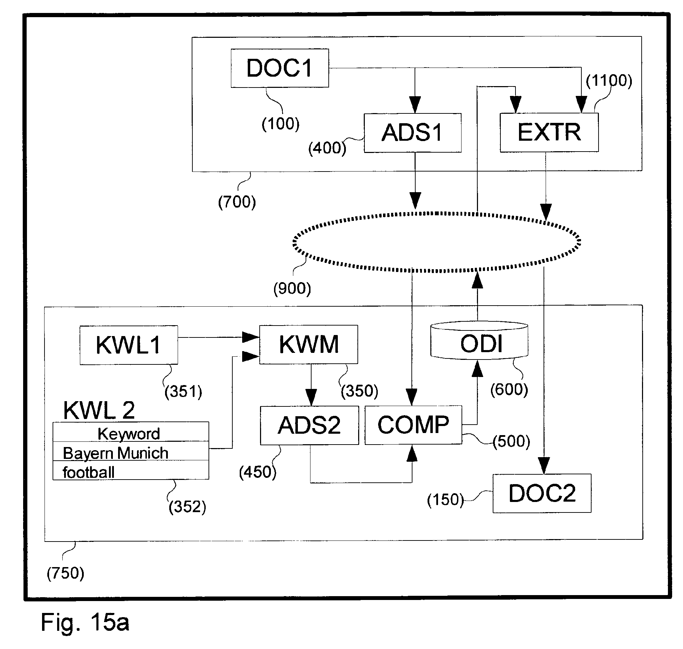

**Fig. 15a** is a diagram respresentation of one fourth example of use of claimed method.

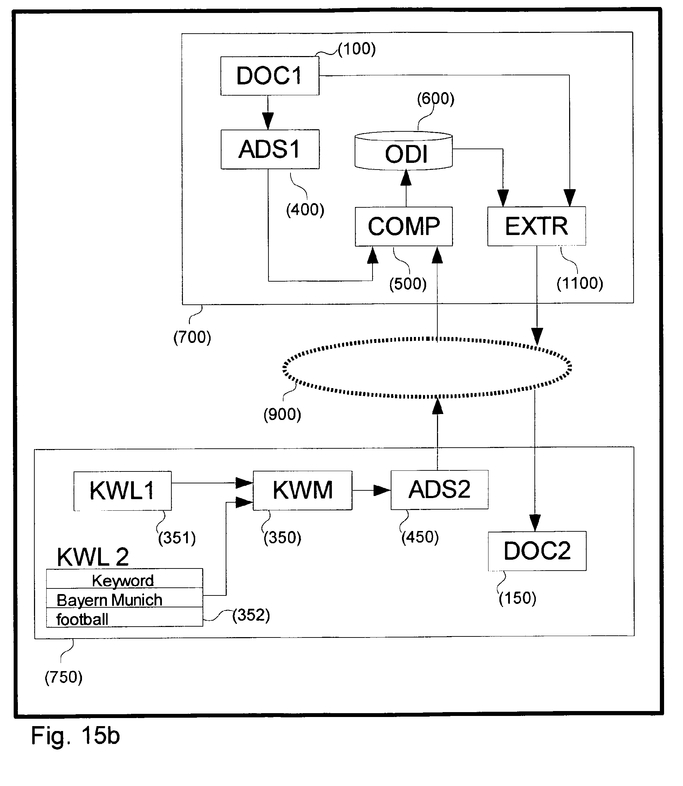

**Fig. 15b** is a diagram respresentation of one fifth example of use of claimed method.

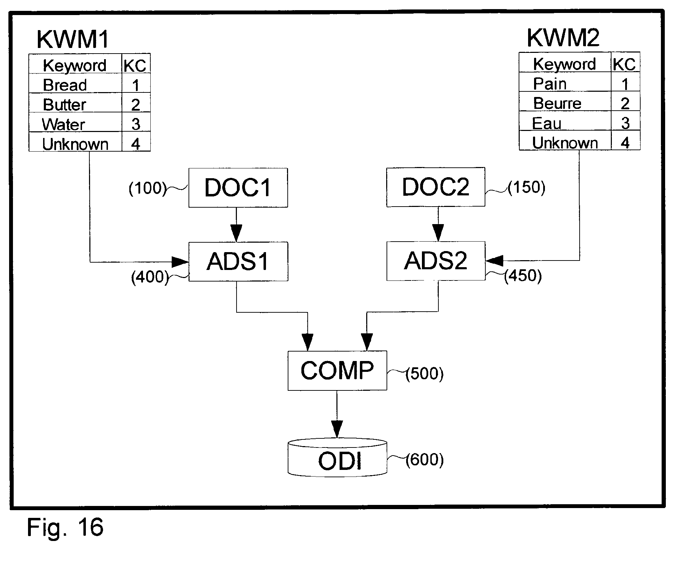

**Fig. 16** is a diagram respresentation of one sixt example of use of claimed method.

### Detailed Description

According to the present invention, a method of analysing differences of at least one document (100, 150), comprising the step of comparing with a comparator (500) at least two analysis data-structures (400, 450) and generating an output data information (600) for simplyfying the analysis of said at least one document (100, 150), **characterised in that** said analysis data-structures (400, 450) comprise datasets (401, 402, 451, 452) using keycodes from keyword maps (300, 350) to represent the content of said document (100, 150), is disclosed.

Said analysis data-structure (400, 450) is used for the preservation of structural information as well as specific indications of content properties. Said analysis data-structure (400, 450) can be defined to represent an entire document (100, 150) or only parts of said document (100, 150).

In the analysis data-structure (400, 450), both structural information and content information will be represented with keycodes which enables a very simplified, very fast and very easy further comparison, analysis and further processing, as from the encoding into said analysis data-structure (400, 450) onwards, only numerical operations will have to be applied to detect the properties of any element of the document (100, 150).

According to an optional embodiment of the invention, at least one of said analysis data-structures (400, 450) has been created based on said at least one document.

To determine if a document has changed, the analysis data-structure (450) created based on one document (150) may be compared with an analysis data-structure (400) given as a reference. This reference analysis data-structure (400) may be originated from an earlier version of the same document (100) or may be originated from any other creation process, be it machine or man-made, e.g. the reference analysis data-structure (400) could contain only keycodes from one search key, to find a match if said search key is contained at any location in said one document.

According to an optional embodiment of the invention, at least one of said analysis data-structures (400, 450) is created during execution of the method.

This allows the definition of at least one part of said keyword list (300, 301, 302, 350, 351, 352), either by user interaction by means of an input device, or by means of an input file, or by a parameter generated during the execution of the method, so enabling a high degree of flexibility for specifying the differences to be analysed for said document (100, 150), as the keywords can be adapted dynamically to the context of the document (100, 150).

According to an optional embodiment of the invention, at least one of said analysis data-structures (400, 450) is loaded from a local location, for instance a local file system, a local register or any other local storage means, or from a remote location over a network or over the internet.

According to an optional embodiment of the invention, each of said analysis data structures (400, 450) is created based on a different document (100, 150).

The method of the invention can be applied to compare two analysis data-structures, generated based on two different documents, originated from two different and disperse sources. In such case, the comparison would enable to understand where the second document is different from the first one, taken as reference.

According to an optional embodiment of the invention, each of said analysis data structures (400, 450) is created based on the same document (100), or on two different versions of the same document (100).

The method of the invention can be applied to compare two analysis data-structures, generated based on one document, at two different points in time and/or two different versions of said document. In such case, the comparison would enable to understand where the second version of the document is different from the first one, taken as reference.

According to an optional embodiment of the invention, the analysis data-structures (400, 450) are created with the same keyword map (300).

As the analysis data-structures (400, 450) are used to encode said at least one document (100, 150), based on one same keyword map (300), differences between said documents (100, 150) will be found, as differenct encodings will only appear where the documents are different.

According to an optional embodiment of the invention, the analysis data-structures (400, 450) are created with different keyword maps (300, 350).

When different keyword maps are used to specify the keycodes, it may result from a comparison, that a keycode for a specific element of document 1 is same as a keycode for another specific element of document 2, but that keyword 1 qualifies a specific property and keyword 2 a totally different specific property.

From a different perspective, if one same document is encoded with two analysis data-structures based on two different keyword maps, a comparison of the analysis data-structures enables to draw conclusions on the differences in the keyword maps as well.

According to an optional embodiment of the invention, said keyword maps (300, 350) and/ or keyword lists (301, 302, 351, 352) are not bound to the document (100, 150), but defined by an industry or other standard, and so can be created separately and independently, in different locations, but will produce the same analysis data-structure (400, 450) on same document (100, 150).

According to an optional embodiment of the invention, said comparator (500) produces an output data information (600), readable by humans or by computers, indicating if said at least one document (100, 150) has changed or not, or in the case where at least two documents (100, 150) are compared, indicating if said documents are different.

To decide if an action has to be taken based on a change in a document, the first approach is to signal if such change occured.

According to an optional embodiment of the invention, said comparator (500) produces an output data information (600), readable by humans or by computers, as a printout, a dataset, a message or a file, stored on a local system or device or transmitted to a remote computer over a network or the internet.

The signalling of said change will be depending on the application and the context, using the method of the present invention. For instance, it could constitue a request for the newly added data in the current analysis data-structure compared to the reference analysis data-structure.

According to an optional embodiment of the invention, said output data information (600) contains a description of the differences found during the analysis of said at least on document (100, 150) during execution of said method, and/or a statement quantifying the results of said analysis.

Said statement may for instance be a percentage of change indicating how many words have changed related to the total number of words in a document, or a count of elements that changed, or an indication of the level of elements that changed, assuming a language that allows to split elements in levels (for instance HTML would ideally be splitted in block and non-block level elements), etc.

According to an optional embodiment of the invention, said output data information (600) contains at least one information on differences, and/or at least one information on insertions, and/or at least one information on deletions.

The present invention enables to locate exact differences of said document (100) when comparing to another document (150) or to a previous version of said document (100a). In using analysis data-structures encoded keycodes being used to represent content or structure elements, an exact indication can be made, which element in the original document (100) has changed. Also by the indication of horizontal and vertical indices, it can be precisely retraced at what location in the original document (100) such change is located. As a current version of a document may be compared with a previous version of same document, it can be concluded based on keycodes, weights and location, if an element was inserted or deleted or changed. So a precise diagnosis of the type of change can be generated.

In a distributed environment (900) as a network or the internet, said one first document (100) could be stored with an analysis data-structure (400) based on said first document (100) on one computer (700) and one second document (150) could be stored with an analysis data-structure (450) based on said second document (150) on another computer (750), wherein the first document (100) and the second document (150) are originated from the same source, wherein the differences between the documents (100, 150) are evaluated with the analysis data structures (400, 450) and wherein on a third computer (800), the comparator (500) is used to obtain output data information (600) by execution of said method. Said output data information (600) contains information which could be used to extract data with an extractor (1100) to be transmitted over a network from the first computer (700) to the second computer (750). Instead of said third computer (800) the method could as well be executed on either the first computer (700) or said second computer (750), depending on the application.

With the ability of locating a change and defining exactly if an element is missing or different from the element in the new data-structure, a query can be formulated containing the indication of all the elements missing compared to the reference data-structure, and so these elements can be selected and transmitted, reported, listed, displayed or highlighted.

Also, this can be used to create composite web pages, pulling content from different websites into one new page. To do so, specific keywords may be specified to select the content to be displayed from said different websites.

The present method of the invention can be realized with a process including but not limited to the following steps:
- S1: Comparison of the length of said analysis data-structures (400, 450): If the length is identical, probability that anything was added or removed is low. If the length is not identical, probability that something was added or removed is high and it can be quantified if the length is bigger, more was added than removed, if the length is smaller, more was removed than added.
- S2: If both analysis data-structures (400, 450) have same length, anding both analysis data-structures will confirm quickly if anything has changed: If the result is 0, something has changed. If the result is 1, then go to the next process or back to beginning of the loop (S1), as nothing has changed.
- S3: The next step is to detect the first difference, comparing from the top, and the last difference, comparing from the bottom of the analysis data-structures (400, 450). The range between the first and last difference, is where to focus the further analysis, as on both sides of this range, everything is found identical.
- S4: Run through all datasets (401, 402, 403, 451, 452, 453) of the reference analysis data-structure (450) within said range, one by one.
- S5: Check if a difference is found by comparing horizontal index in reference analysis data-structure (450) is not same than in current analysis data-structure (400) or keycode in reference analysis data-structure (450) is not same as in current analysis data-structure (400).
- S6: If a difference is found, go on and analyse the difference (S10).
- S7: If no difference is found, check if any weight is available and if it is different in the reference analysis data-structure (450) compared to the current analysis data- structure.
- S8: If the weight is different, interpret the dataset as altered - this may concern a difference in length of text contained within the corresponding node and its children, then loop to the next row of datasets, go to (S1).
- S9: If the weight is not different, loop to the next row of datasets, go to (S1).
- S10: Analyse difference: First try to find a dataset identical to the current dataset of the reference analysis data-structure in the current analysis data-structure.
- S11: If said identical dataset is found, note offset, interpret all elements between current dataset of the current analysis data-structure and this identical dataset as inserted.
- S12: If no identical dataset is found, check if next dataset is not found either.
- S13: If the next dataset is not found either, interpret reference data-structure element as deleted.
- S14: If the next dataset is not found, skip.
- S15: Loop to next row of datasets, go to (S1).

During process steps S1-S15 it may be necessary to synchronize pointers pointing at different datasets (401, 402, 451, 452) in different analysis data-structures (400, 450).

The analysis of a single document is a solution to understand specific topics related to that single one document, but in today's real world applications it will be more interesting to be able to analyse tens, hundreds, or thousands of documents.

According to an optional embodiment of the invention, the method comprises a means to submit multiple documents (100, 110, 120, 130, 140) to analysis, using one comparator (500), producing at least one output data information (600) for all the documents (100, 110, 120, 130, 140).

For instance, in a large web service application for analysing web pages, a file could be used, containing a list of hyperlinks with uniform resource locators referring each to one of said multiple documents (100, 110, 120, 130, 140) to submit them for analysis, using one comparator (500), processing each of said documents (100, 110, 120, 130, 140) and adding the respective output data information (601, 602, 603, 604, 605) to one cummulated output data information (600).

According to an optional embodiment of the invention, said multiple documents (100, 110, 120, 130, 140) are compared to one other single document (150).

For such case said multiple documents (100, 110, 120, 130, 140) may be submitted to one comparator (500), processing each of said documents (100, 110, 120, 130, 140), comparing each of them with one and same reference document (150) and adding the respective output data information (601, 602, 603, 604, 605) to one cummulated output data information (600).

In some applications, where multiple documents are analysed, it may be interesting to determine similarities in such documents in comparison to one and same reference and then decide how to treat these similarities, for instance to select them, to emphasize them or to hide them or by inverse selection, select all the parts that are different.

According to an optional embodiment of the invention, said multiple documents (100, 110, 120, 130, 140) are compared to their respective previous versions (100a, 110a, 120a, 130a, 140a), recorded at one or different points in time.

For such case said multiple documents (100, 110, 120, 130, 140) may be submitted to one comparator (500), processing each of said documents (100, 110, 120, 130, 140), comparing each of them with their respective previous versions (100a, 110a, 120a, 130a, 140a) and adding the respective output data information (601, 602, 603, 604, 605) to one cummulated output data information (600). The respective previous versions may be provided from a local or remote storage system or any other storage means in form of the document (100a, 110a, 120a, 130a, 140a) itself, then the respective analysis data-structures (400a, 410a, 420a, 430a, 440a) are generated based on said document and submitted to the comparator (500). Or the respective previous versions may be provided from a local or remote storage system or any other storage means in form of the respective analysis data-structures directly and are submitted to the comparator (500).
To enable easy finding of said respective analysis data-structures, the invention suggests a special naming scheme to be defined, enabling to quickly establish a relation between the current document (100) and an analysis data-structure (400a) referring to a previous version of same document (100).

According to an optional embodiment of the invention, said multiple documents (100, 110, 120, 130, 140) are each compared with their predecessor: 110 compared to 100, 120 compared to 110, 130 compared to 120, etc.

In a similar manner, said multiple documents (100, 110, 120, 130, 140) could be compared with their follower (100 to 110, 110 to 120, 120 to 130, ...).

According to an optional embodiment of the invention, a checksum is computed on the analysis data-structure and compared to another checksum, to determine if a change occured.

Checksums are generally used, to enable fast detection of equality of data. If the checksum is computed on at least one document (100, 150), this enables to fast detect the equality of documents (100, 150). In the case of the present invention, not the at least one document (100, 150) is used for comparison, but the anaylsis data-structures (400, 450) based on said at least one document (100, 150). As said analysis data-structures can be evaluated totally separatedly and independently, it can be desireable to compute a checksum on the analysis data-structures to even further improve detection of equality of the analysis data-structures (400, 450), that could then also be concluded as equality of the at least one document (100, 150) they are based on.

According to an optional embodiment of the invention, instead of said one comparator (500) several comparators (500, 550) are used, comprising a means to compose the output data information (600) from the output data of said several comparators (500, 550).

To enable to improve the speed and performance of the analysis, for instance in a large web service application, comparators could be distributed in a network, internet or cloud computing environment.

According to an optional embodiment of the invention, said several comparators (500, 550) may be in situated in different locations, connected and controlled over a network or the internet.

### Examples

A first example of the use of the claimed method of the invention, would be a program finding differences in web-pages. A web page would be recorded at two different points in time: A first time to build a reference analysis data-structure defining the original document characteristics. A second time to build the current analysis data-structure, reflecting the current step of evolution of said document. Then the method of the invention would be used to compare the current analysis data-structure with the reference analysis data-structure to find the location and type of possible differences. Said differences would be protocolled in a file, that is returned to a user.

A second example of use of the claimed method, would be a system to optimize the downloads of content from a server to a web client. In this system one analysis data-structure based on one first document is stored on the web client and one second document is stored with an analysis data-structure based on said second document on said server. The first document and the second document are originate from the same source, but were loaded at different points in time. The web client notifies the server of the availability of the analysis data-structure and sends it to the server on request. The server analyses the differences between the documents, comparing the analysis data-structure from the first and the second document with a comparator and generates the output data information by execution of said method. That said output data information contains information to select the data to be transmitted over the network from the server to the web client. If the page has not changed, the server concludes there is no data to send, but a simple notification for the web client that nothing has changed, or that it should use the resource of the first document, if still available locally.
A third example would be a similar system, formed in that not the client sends it's analysis data-structure to the server, but the server responds to a request for the web page by sending his current analysis data-structure to the web client. The web client then performs the analysis and requests explicitly the information it needs.

A fourth example of use of claimed method, would be a system for selecting parts of a web page to be displayed. The selection would be based on the comparison of an analysis data-structure based on a document and an analysis data-structure that is created to match specific elements. The comparator here may be modified in the sense it would not compare row by row, but should rather try to find all elements specified in the second analysis data-structure in the first. If any such element is found, the corresponding content is selected. The selection could be based on keywords as "Bayern Munich", "football", etc. A fifth example would be a similar system, formed in that not the server sends it's analysis data-structure to the client, but the client sends his current analysis data-structure to the server. The server then performs the analysis and extracts explicitly the information the client needs and returns it to the client.

A sixt example of use of claimed method, would be a system to perform queries in documents of different languages. Assuming to use several key maps, one per language, these keymaps to have identical keycode for words with same meaning, a comparison of two analysis data-structures based on two different documents in two different languages would enable to find if the two documents contain similar words with same meaning, and so allow the conclusion that they may be relevant to said queries.

### Conclusion

The method of the current invention provides a new means to analyse differences in documents with a high level of precision, enabling to define exactly what type of change occured in a document based on the comparison of an analysis data-structure with another analysis data-structure.

By shifting the comparison to the analysis data-structures, a much more efficient comparison can be applied, as only arithmetic operations are needed to identify potential differences or equalities.

The method of the current invention has been found to reduce the amount of time needed for such evaluation, as well as the amount of resources. Especially memory and bandwidth resources can be drastically reduced in applying said method.

## Claims

1. Method of analysing differences of at least one document (100, 150), comprising the step of comparing with a comparator (500) at least two analysis data-structures (400, 450) and generating an output data information (600) for simplyfying the analysis of said at least one document (100, 150), **characterised in that** said analysis data-structures (400, 450) comprise datasets (401, 402, 451, 452) using keycodes from keyword maps (300, 350) to represent the content of said document (100, 150).

2. The method of claim 1, wherein at least one of said analysis data-structures (400, 450) has been created based on said at least one document.

3. The method of one of claims 1 or 2, wherein at least one of said analysis data-structures (400, 450) is created during execution of the method.

4. The method of one of the claims 1 to 3, wherein at least one of said analysis data-structures (400, 450) is loaded from a local location, for instance a local file system, a local register or any other local storage means, or from a remote location over a network or over the internet.

5. The method of one of claims 1 to 4, wherein each of said analysis data structures (400, 450) is created based on a different document (100, 150).

6. The method of one of claims 1 to 4, wherein each of said analysis data structures (400, 450) is created based on the same document (100), or on two different versions of the same document (100).

7. The method of one of claims 1 to 6, wherein the analysis data-structures (400, 450) are created with the same keyword map (300).

8. The method of one of claims 1 to 6, wherein the analysis data-structures (400, 450) are created with different keyword maps (300, 350).

9. The method of one of the claims 1 to 8, wherein keyword maps (300, 350) and/or keyword lists (301, 302, 351, 352) are not bound to the document (100, 150), but defined by an industry or other standard, and so can be created separately and independently, in different locations, but will produce the same analysis data-structure (400, 450) on same document (100, 150).

10. The method of one of the claims 1 to 9, wherein said comparator (500) produces an output data information (600), readable by humans or by computers, indicating if said at least one document (100, 150) has changed or not, or in the case where at least two documents (100, 150) are compared, indicating if said documents are different.

11. The method of one of the claims 1 to 9, wherein the said comparator (500) produces an output data information (600), readable by humans or by computers, as a printout, a dataset, a message or a file, stored on a local system or device or transmitted to a remote computer over a network or the internet.

12. The method of claim 11, wherein said output data information (600) contains a description of the differences found during the analysis of the at least on document (100, 150) during execution of said method, and/or a statement quantifying the results of said analysis.

13. The method of claim 12, wherein said output data information (600) contains at least one information on differences, and/or at least one information on insertions, and/or at least one information on deletions.

14. The method of claim 1 to 13, comprising a means to submit multiple documents (100, 110, 120, 130, 140) to analysis, using one comparator (500), producing at least one output data information (600) for all the documents (100, 110, 120, 130, 140).

15. The method of claim 14, wherein said multiple documents (100, 110, 120, 130, 140) are compared to one other single document (150).

16. The method of claim 14, wherein said multiple documents (100, 110, 120, 130, 140) are compared to their respective previous versions (100a, 110a, 120a, 130a, 140a), recorded at one or different points in time.

17. The method of claim 14, wherein said multilple documents (100, 110, 120, 130, 140) are each compared with their predecessor: 110 compared to 100, 120 compared to 110, 130 compared to 120, etc.

18. The method of claims 1 to 17, wherein a checksum is computed on the analysis data-structure and compared to another checksum, to determine if a change occured.

19. The method of claims 1 to 18, wherein instead of one comparator (500) several comparators (500, 550) are used, comprising a means to compose the output data information (600) from the output data of said several comparators (500, 550).

20. The method of claim 19, wherein said several comparators (500, 550) may be in situated in different locations, connected and controlled over a network or the internet.
